# EUROPEAN PATENT APPLICATION

(11) **EP 1 837 193 A1**
(43) Date of publication of application: **26.09.2007**
(21) Application number: 07251136.3
(22) Date of filing: 17.03.2007
(51) Int. Cl.: B41M 3/14, B41M 3/00

(54) **Brand protection label with a tamper evident abrasion-removable magnetic ink**

(30) Priority: 21.03.2006 US 743609 P
(71) Applicant: JDS Uniphase Corporation, San Jose, CA 95131 (US)
(72) Inventor: Raksha, Vladimir P., Santa Rosa, CA 95403 (US); Coombs, Paul G., Santa Rosa, CA 95405 (US); Markantes, Charles T., Santa Rosa, CA 95401 (US); Teitelbaum, Neil, Ottawa, ON K1S 5C4 (CA)
(74) Representative: McKechnie, Neil Henry

(57) **Abstract**

The invention discloses security articles printed with an opaque or semi-transparent magnetic scratch-off removable composition printed on a substrate. The security article allows one to determine if the scratch-off media has been substantially removed prior to awarding a prize. Furthermore the invention discloses a security label having an image that is formed by applying a magnetically alignable pigment aligned by a magnetic field. A region of the magnetically formed image is more removable than another region adjacent to it, so that verification can be made of the label and its contents.

## Description

### Field of the Invention

The invention relates to security articles or labels printed with an opaque or semitransparent magnetic scratch-off removable composition printed on a substrate.

### Background of the Invention

Scratch-off inks have been known for a long time. They are used for disguising covert information printed on lottery tickets, telephone cards, gift cards, gaming cards, and the like, to conceal the information from viewing before it is purchased.

Scratch-off lottery tickets are common in the lottery industry. Winning prize data is covered with a layer of opaque scratch-off ink. Removal of the layer of the ink exposes the data for immediate verification to determine if a particular ticket is a winner. In other words, typical scratch-off lottery tickets require the player to remove the scratch-off layer to view the result of the game, or winning number, etc.

Many patents describe scratch-off systems. For example, US Pat. 6,901,043 entitled "Scratch-off material layer applied on optical recording media" in the names of Zhang et al., discloses a layer of opaque scratch-off material formed on a protective layer of compact disk.

US Patent 5,215,576 in the name of Carrick assigned to GTECH Corporation discloses a scratch-off coating composition and method for application of the coating to lottery forms and the like and employs a water based dispersion of acrylic resin. A pigment of metallic particles such as aluminum paste is added, together with powdered filler such as calcium carbonate. The composition can be applied in successive layers, including outer layers of relatively higher proportions of resin for improving wet rub resistance.

US Patent 6,160,046 in the names of Bleikolm et al, assigned to SICPA Holding S.A. discloses an abrasion-removable composition which is easy to apply and which has good drying properties and adheres sufficiently firmly to have good tamper-evidence behavior. Removable coating or ink compositions are basically mixtures of a varnish and an opacifying pigment. The compositions are based on elastomeric resin in solution and particulate additives comprising at least one pigment. The role of the opacifying pigment is to ensure that it will not be possible to fraudulently read the variable information through the dried ink layers. Organic pigments like carbon black or phthalocyanine blue as well as inorganic ones like aluminum or bronze powders or titanium dioxide may be used alone or in combination. The number and the thickness of the ink layers are adjusted so as to reach an optimal opacity.

US Patent Application 20030134939 discloses a composition for forming layers on substrates which are removable upon scratching after being cured by UV radiation.

US Patent 5,838,466 discloses hidden holograms as a security feature for lottery tickets. Replicas of a surface relief hologram, or other light diffraction pattern, are coated with a transparent material having substantially the same refractive index as the holograms to conform to the surface relief patterns and thus hide the hologram. The coating is peeled by hand off of the surface relief pattern in order to reveal an image visible in light reflected from the hologram. Such hidden holograms can be attached to a greeting card to reveal a greeting when the coating is removed, attached to pages of magazines or books to carry an advertising message, and the like. Other uses include making lottery tickets or other indications of a prize from such holograms.

US Patent 5,037,101 discloses a hologram provided underneath a scratch off layer of the ticket to enhance the ticket's authenticity.

US Patent 5,981,040 discloses a holographic image produced by the impression of a shim onto a metallic ink coating comprising a plurality of metallic particles suspended in a resinous ink binder. A resinous or substantially tactile and non-resilient undercoat can be applied to the substrate also to receive the impression of the shim and to create more distinct holographic imagery. A substantially clear overcoat can also be applied over the metallic ink coating to enhance the reflectivity of the image.

US Patent 6,729,656 discloses a method of forming a debit card and a debit card formed by the method. A planar card member has opposing surfaces. A PIN is printed on one of the surfaces. The planar card member is advanced along a predetermined path of travel such as on a conveyor. A radiation cured, opaque scratch-off coating is applied onto the surface having the PIN such that the PIN is covered by the applied scratch-off coating. The scratch-off coating is radiation cured, preferably by ultraviolet radiation.

US Patent Application 20050133584 discloses a method of embedding an optical signature in a document. The optical signature is an optical pattern that is generated from and represents a known mathematical value embodied as printed geometric relationships on the documents, and the same mathematical value can be generated from examination of the embedded optical pattern on a document. Other data, such as cryptographic keys, may be required to generate the same mathematical value after examining the embedded pattern. The document can thus be validated, authenticated, or the determination of a valid copy of an original document with the embedded optical signature made through comparison of the known mathematical value and the mathematical value generated from the optical pattern on the document. The optical pattern can also be generated from other identification codes on the document, such as universal product codes (UPC) or other bar codes, as could be present on lottery tickets. Moreover, the optical pattern can, in itself, carry extensive data which is not necessarily related to or cannot be created from other sources of data already on the ticket.

It is an object of this invention to prevent counterfeits of brand protection labels by technologies such as holograms, micro-optics and the like, and to provide brand protection labels that are easy to authenticate and difficult to copy.

Many of these technologies use differently embossed polymer foils to generate various optical effects at their observation either by the naked eye or with utilization of instruments. Foil-based security elements with optical features are attached to the substrate, in most cases, either by hot stamping or other lamination techniques to make them non-removable. Commonly, the embossed part of the structure is located between the substrate and the foil. The foil which is often polyester has two primary functions; it bears a holographic embossing on its lower surface and it protects the embossing against a potential damage from the outside.

It is an object of this invention to use magnetically alignable flakes or particles in a manner which offers brand protection labels a high degree of security.

Methods of generation of various optical effects with magnetic platelet-like particles aligned in desired patterns are described in United States published patent application numbers 20060198998, 20060194040, 20060097515, 20060081151, and 20050123755 assigned to JDS Uniphase Corporation incorporated herein by reference. Flat or micro-structured magnetically alignable particles of any platelet-like pigment dispersed in a layer of a wet ink vehicle and printed on the surface of the substrate align along the lines of an applied shaped magnetic field forming flat micro-arrayed mirror structure. After the particles solidify within the ink vehicle, their alignment relative to the substrate is fixed. When viewed at different angles, the particles, depending on their fixed orientation reflect the incident light in different directions generating various optical effects. Labels with such optical effects, printed at high speed with a printing press can be effectively used for a brand protection providing security.

### Brief Description of the Drawings

Exemplary embodiments of the invention will now be described in conjunction with the figures in which:

Fig. 1 is a print of a first stage of an image having a dark background and a releasable coating in the form of the word "OK" supported by a web or substrate.

Fig. 2 is a print of the image of Fig. 1 wherein an additional coating layer of abrasion removable ink containing magnetic pigment particles is coated over most of the image in Fig. 1.

Fig. 3 is a print of the image in Fig. 2 after the magnetic particles in the ink have been magnetically oriented to form a rolling bar.

Fig 4 is the image shown in Fig. 3 after some of the magnetic ink in a region in the lower right of the image has been scratched away exposing the releasable coating.

Fig. 5 is a cross-sectional view of an image similar to the images shown in Figs 2, 3, and 4.

### Summary of the Invention

In accordance with an aspect of this invention, to prevent attempts to make imitations of such labels this invention provides an abrasion-removable magnetic ink.

This ink in accordance with this invention does not require properties similar to the aforementioned scratch-off inks used on lottery tickets.

In accordance with the invention, there is provided, an image comprising a coating of magnetically aligned pigment flakes wherein the flakes are aligned upon a substrate in a predetermined pattern, and wherein flakes within a first sub-region of the image are more removable by scratching or rubbing, than other flakes within other sub-regions of the image.

### Detailed Description

For all intents and purposes, the term "magnetic flakes" is used herein to means flakes or particles that are alignable in a magnetic field. In alternative embodiments flakes alignable in electric fields may be used, with an applied electric field, however it is preferable and more cost effective to use magnetic fields with magnetic field alignable flakes.

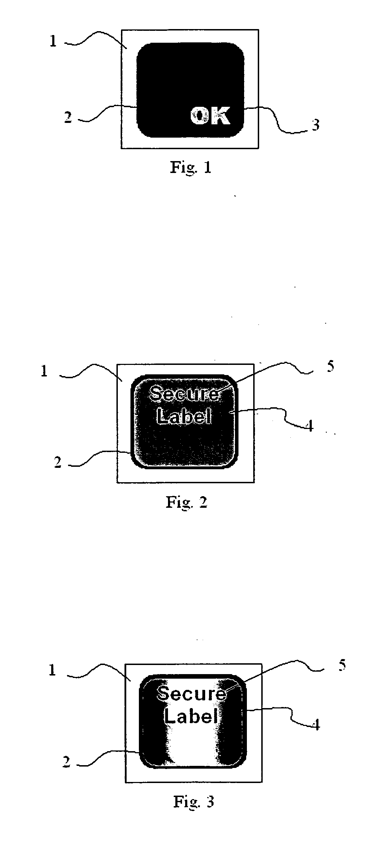

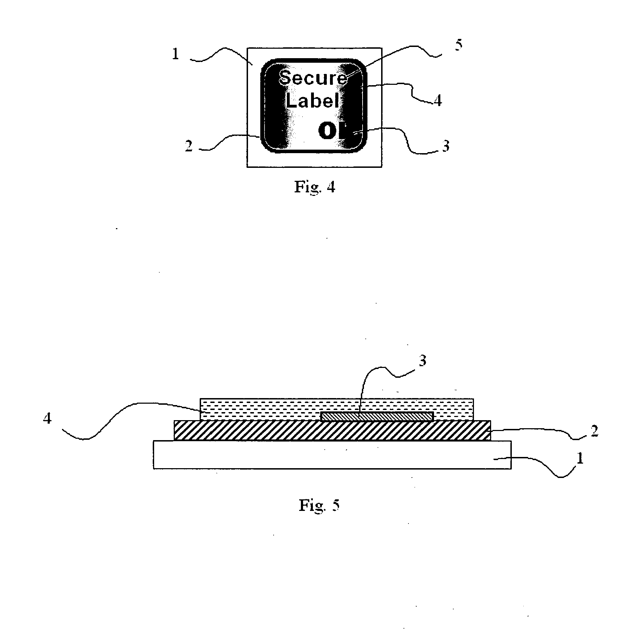

Referring now to Figs 1 through 4 the manufacture of a secure label in accordance with this invention is shown. The substrate 1 in the exemplary embodiment of Fig. 1 is printed with the dark label background layer or coating 2. A release layer 3 in the form of the letters "OK" is printed on the top of the background 2. The release layer in Fig. 1 is printed with transparent in and shown white for illustrative purposes to make it visible in Fig. 1. However the letters "OK" can be printed with transparent or colored release coating. In a subsequent printing process, shown in Fig. 3, a layer 4 of abrasion-removable ink containing magnetic pigment particles is coated on the top of the background layer 2. The ink layer 4 may cover a smaller region than layer 2 as shown in Fig. 2 for illustrative purposes. The ink layer 4 has openings 5 in the shape of the words "Secure Label" revealing the dark background layer 2 through them. The ink layer 4 is exposed to a shaped magnetic field in the next fabrication step. When the image shown in Fig. 2 is placed in a magnetic field the particles in the ink layer 4 align themselves along the magnetic field lines creating a kinematic optical illusive effect as shown in Fig. 3. The effect shown there is similar to the light reflected from a convex cylindrical surface.

The concentration of the magnetic particles should be great enough to generate desirable optical effects in the printed label. Thus, when viewed the label shows the security optical feature. Although a rolling bar effect is shown in Fig. 3 after the ink layer 4 is subjected to a desired magnetic field, other fields can be used instead to generate other desired effects in place of a rolling bar.

In operation, conveniently if one inspecting the label has concerns about the authenticity of the product bearing the label, rubbing the label or the part of the label will result in removal of coating in the region having the release coating thereunder. This can be done by scratching with a key or a fingertip.

An important aspect of this invention is that the magnetically formed image has a region therein that is more easily removable by scratching whilst one or more other regions of the image are not as easily removable. For example if one uses a key to scratch a region of the image and the key rubs coating in regions 3 and region 4, only coating in region 3 is removed revealing the authenticating letters OK indicating that the label is genuine and an assumption is made that the product likely is genuine as well.

In this example the printed text "OK" is printed upon the substrate prior to the application of the ink layer 4. Of course, any text could replace the words "OK". For increased security and in an attempt to make the label more secure, additional security feature may be applied to the substrate prior to the application of the magnetic ink release layer. For example the text, symbols, or images may be applied using existing security features. The word "OK" may be itself be magnetically aligned flakes in a cured ink vehicle; or, may be a holographic image, or may be covert flakes, dependent upon the level of security required.

In an alternative embodiment not shown, region 3 may simply be confined to the region where the text, i.e. "OK" is present rather than the large rectangle shown.

In yet another embodiment not shown, an image underneath the magnetically aligned coating creates different a scene or image. When it is scratched it reveals an image thereunder. For example, a scene showing magnetically aligned flakes in the form of an optically illusive image of a body of water such as a lake or ocean is visible wherein the waves appear to move or roll as the image is tilted; this is the kinematic effect within the image. Surprisingly, when the scratchable region supported by the clear release coating is removed, a fish under the clear release coating appears that forms an image of fish swimming in the body of water. In this embodiment the magnetically aligned flakes forming the fish are formed of non-scratchable, non-removable pigment and there is no releasable layer under the fish. Thus the image changes but appears to the person authenticating as a complete but different image even after the region of coating of aligned flakes is removed.

In all of these embodiments an image having a region with aligned flakes is shown and a predetermined portion of the region is scratchable or removable with a simple tool, coin, key or fingernail.

The magnetically alignable flakes may be optically variable, and/or may have diffractive patterns therein. The flakes may also have covert symbols or other indicia impressed therein. Yet in a simpler embodiment the flakes may be Ni particles in a colored dye. The optically variable flakes may be magnetically alignable color shifting flakes.

With this invention the inventors found a solution by providing a printed security image with a composite scratch-off ink forming recognizable optical effects in a magnetic field during fabrication.

Validation of a brand protection label containing a printed security article with an embedded optical signature, includes the steps of examining an optical pattern that is magnetically embedded on the document. The smear or shear of the optical pattern indicates that the overt feature was disturbed and the document's value can not be trusted. However the complete removal of the overt feature to expose the layer beneath only in the region of the release layer preserving the magnetic coating in adjacent regions provides an indication that the label is authentic. This effect is perhaps more striking providing the user with a higher degree of confidence of authenticity when the removable region has an expected shape; that is, when an entire rectangle, circle, triangle or symmetric region is removable; or, if only letters or logos are removable against a clear defined non-removable background.

This invention differs significantly from other scratch-off paints as the ink vehicle is clear or substantially light transmissive. If the carrier were opaque, the effects of the magnetically aligned flakes would not be visible or would be very difficult to see, if at all.

In one approach, any flat or micro-structured platelet-like magnetic pigment, preferably magnetic metal-dielectric pigment of general structure D/R / M / R / D, where D is Dielectric, R is a reflector layer consisting of one of aluminum, silver, and copper or another reflecting metal, M is a magnetically alignable material, can be mixed with a known conventional or a custom formulated clear or tinted scratch-off ink vehicle. The lines of the shaped magnetic field come out from the magnet and go through the substrate with the wet print at different angles. The particles receive alignment along magnetic lines and maintain this alignment after curing of the ink vehicle forming recognizable kinematic optical effects.

An alternative embodiment of the invention is shown in Fig. 5, wherein a thin semitransparent abrasion-removable top coating 4 is provided over top of a brand protection label 2 printed on the substrate 1. The label 2 has a release layer 3 covered by the top coating 4. The top coat 4 is preferably fabricated from a clear scratch-off ink vehicle mixed with magnetic flakes in low concentration, preferably in the range of 0.5wt. % to 15wt. %. The ink containing magnetically alignable flakes is placed in the field to form a predetermined pattern or an optical effect. Preferably the pattern would repeat the contour of a shaped magnet leaving the rest of the printed area visually unaffected. The patterned effect could be for example, a "tiger eye" feature other know features as are described in U.S. Patent applications 20060198998, 20060194040, 20050106367 and 20040051297.

In an alternative but similar embodiment to that of Fig. 5, standard magnetic ink was used instead of an abrasion-removable top coat, i.e. instead of using a scratchable ink vehicle.

The applicant printed two different release coats on a paper substrate and overprinted them with flexo and screen inks. The inks in area covering the release coat, released easily by scratching it with a fingernail. Scratching of the ink printed over the portion of the paper substrate without the release coating was much more difficult.

The release coats used were produced by Mayzo Inc. which makes broad variety of release coats. Its release coat RA-150W is an aliphatic modified polyurethane dispersion in water. RA-110W is a fluoro-acrilate water based emulsion that provides superior release characteristics. RA-120W is a water-soluble fluorochemical. It is printable by conventional flexo printing technique. Ichemco produces a release agent based on polyurethane composition dissolved in solvent. Release solutions made by other manufacturers are commercially available. The abrasion-removable ink vehicle, used in our experiments, was produced by RAD-Cure Corporation. Conventional magnetic ink was fabricated by dispersion of magnetic particles in Sericlo colored UV curable ink vehicle for screen printing or in flexo ink by Nazdar.

The following two samples were made:

The word **ABC** was silk-screen printed on the surface of the paper with the release coat Mayzo RA-150W. A pattern of a square box was silk screen printed with ink, containing magnetic particles, on the top of the paper. The word **ABC** was positioned in the center of the square. Conventional magnetic ink was placed in the field to align magnetic particles along lines of applied magnetic filed and the cured with UV light. Scratching of the print with a fingernail removed central part of the print revealed white area in the shape of **ABC.**

The word **ABC** was silk-screen printed on the surface of the paper with the release coat Mayzo RA-120W. A pattern of a square box was printed with a flexo ink, containing magnetic particles, on the top of the paper. The word **ABC** was positioned in the center of the square. Conventional magnetic ink was placed in the field to align magnetic particles along lines of applied magnetic filed and the cured with UV light. Scratching of the print with a fingernail removed central part of the print revealed white area in the shape of **ABC**.

Of course numerous other embodiments may be envisaged without departing from the spirit and scope of the invention.

## Claims

1. An image comprising a coating of magnetically aligned pigment flakes wherein the flakes are aligned upon a substrate in a predetermined pattern, and wherein flakes within a first sub-region of the image are more easily removable by scratching or rubbing, than other flakes within other sub-regions of the image.

2. An image as defined in claim 1, wherein the image is an authentication image for authenticating a product and wherein a second image is hidden under the authentication image and is only visible after removing some of the removable coating in the first sub-region.

3. An authentication image as defined in claim 2 wherein the first sub-region is marked with a border or other indicia indicating a transition between the first sub-region and an adjacent sub-region.

4. An image as defined in claim 1 wherein the coating within the first sub-region and the other sub-regions is a contiguous coating layer and wherein the pigment flakes within the first sub-region and other sub-regions are aligned by a same magnetic field spanning the regions.

5. An image as defined in claim 4, wherein the flakes within the first sub-region are disposed within an ink vehicle and wherein the ink vehicle is coated upon a releasable coating.

6. An image as defined in claim 5, wherein the releasable coating is coated over indicia and wherein the image forms a security image.

7. An image as defined in claim 6 forming a label, wherein the indicia is an indicator indicating that the label is authentic.

8. An image as defined in claim 6, wherein the indica is in the form of text or a symbol or a logo.

9. An image as defined in claim 4 wherein text is printed over the contiguous coating layer so as to be visible on an outer exposed surface of the image.

10. An image as defined in claim 6, wherein a symbol, text or logo is printed over the contiguous coating layer so as to be visible on an outer exposed surface of the image.

11. An image as defined in claim 4 wherein the pigment flakes are color-shifting flakes, color switching flakes, diffractive flakes, or covert flakes having covert symbols thereon.

12. An image comprising a coating of magnetically aligned pigment flakes wherein the flakes are aligned upon a substrate in a predetermined pattern and wherein the coating is a scratchable coating applied over a marked label.

13. A method of forming a security image comprising the steps of:
a) providing a substrate having a primary region for supporting a coated image, wherein said primary region includes a sub-region smaller than the primary region;
b) coating the sub-region with a releasable coating;
c) depositing a coating of magnetically alignable pigment flakes disposed in a carrier over the entire primary region;
b) applying a magnetic field to the coating of magnetically alignable pigment flakes disposed in the carrier so as to magnetically align the flakes and form the security image, wherein said method results in an image wherein flakes covering the sub-region are more removable by scratching or rubbing, than other flakes within the primary region.

14. A method as defined in claim 13 wherein the step of coating the sub-region with a releasable coating is preformed without coating the remaining part of the primary region with the releasable coating.

15. A method as defined in claim 14 wherein the pigment flakes are color-shifting flakes, color switching flakes, diffractive flakes, or covert flakes having covert symbols thereon.

16. A method as defined in claim 15, wherein the sub-region is entirely contained with the primary region and wherein the primary region provides a border for the sub-region.

17. A method as defined in claim 14 wherein the magnetic field is applied such that the image is continuous throughout the primary region and sub-region.

18. A method of forming a security image comprising the steps of:
a) providing a substrate having a primary region for supporting a coated image, wherein said primary region includes a sub-region smaller than the primary region, and wherein the sub-region is coated with a releasable coating;
b) depositing a coating of magnetically alignable pigment flakes disposed in a carrier over the entire primary region; and,
c) applying a magnetic field to the coating of magnetically alignable pigment flakes disposed in the carrier so as to magnetically align the flakes and form the security image, wherein said method results in an image wherein flakes covering the sub-region are more removable by scratching or rubbing, than other flakes within the primary region.

19. A scratch-off optical effect ink comprising a light transmissive non-opaque scratch-off ink vehicle having magnetically orientable flakes therein, wherein the concentration of flakes within the ink vehicle is sufficient to obscure of block an image or indicia covered by said scratch-off optical effect ink.
